# EUROPEAN PATENT SPECIFICATION

(11) **EP 3 133 330 B1**
(45) Date of publication and mention of the grant of the patent: **06.04.2022**
(21) Application number: 15780185.3
(22) Date of filing: 20.03.2015
(51) Int. Cl.: D04H 1/4218, D04H 1/46, D04H 1/74, F16L 59/02, F16L 59/065, F16L 59/14

(54) **VACUUM HEAT-INSULATING MATERIAL AND HEAT-RETAINING BODY WITH SAME**
VAKUUMISOLIERTES WÄRMEDÄMMUNGSMATERIAL UND WÄRMESPEICHERKÖRPER DAMIT
MATÉRIAU D'ISOLATION THERMIQUE SOUS VIDE ET CORPS DE CONSERVATION DE CHALEUR LE COMPORTANT

(30) Priority: 17.04.2014 JP 2014085585
(43) Date of publication of application: 22.02.2017
(73) Proprietor: Mitsubishi Electric Corporation, Chiyoda-ku Tokyo 100-8310 (JP)
(72) Inventor: SHINOKI, Toshio, Tokyo 100-8310 (JP); YAJI, Yoshikazu, Tokyo 100-8310 (JP); SUZUKI, Shunkei, Tokyo 100-8310 (JP)
(74) Representative: Sajda, Wolf E.
(86) International application number: PCT/JP2015/058539
(87) International publication number: WO 2015/159646

(56) References cited:
- WO-A1-2006/059752
- JP-A- H0 796 563
- JP-A- 2006 194 297
- JP-A- 2007 239 764
- JP-A- 2010 242 866
- JP-A- 2011 196 392
- KR-B1- 100 746 989
- US-A1- 2008 280 090

## Description

### Technical Field

The present invention relates to a vacuum thermal insulator that can be easily bent, and a heat retainer having the same.

### Background Art

Glass wool is a typical material used as an insulation material for boiler systems, heating systems, refrigeration apparatuses, or other systems. However, from the standpoint of saving energy, use of vacuum thermal insulators have been proposed.

Vacuum thermal insulators can reduce the heat conductivity by at least one order of magnitude, compared with glass-wool insulation materials, and have higher insulation performance than the glass-wool insulation materials. Objects, such as refrigeration apparatuses, to which vacuum thermal insulators are attached include those having a flat attachment surface and those having a curved attachment surface for the vacuum thermal insulators. Hence, there is a need for processing vacuum thermal insulators such that they have a curved shape in use, and various vacuum thermal insulators that can be easily bent have been proposed (see, for example, Patent Literatures 1 and 2).

The technique described in Patent Literature 1 makes bending of a vacuum thermal insulator into a three-dimensional shape easy by providing a groove or a recess and a projection in the vacuum thermal insulator. Note that, in the technique described in Patent Literature 1, the groove or the recess and the projection are formed in the vacuum thermal insulator by, for example, clamping, from above and below, an outer wrapping member having a core member inserted therein with dies under vacuum,.

The technique described in Patent Literature 2 makes bending easy by providing a groove in a vacuum thermal insulator. Note that, in the technique described in Patent Literature 2, the groove is formed in a side surface part perpendicular to the thickness direction of the insulation material by compression-molding the vacuum thermal insulator. Patent Literature documents 3 to 6 also discuss vacuum thermal insulators, related to the present invention.

### List of Citations

### Patent Literature

Patent Literature 1: Japanese Unexamined Patent Application Publication JP 2007-205 530 A
Patent Literature 2: Japanese Unexamined Patent Application Publication JP 2001-336 691 A
Patent Literature 3 : US 2008/280090
Patent Literature 4 : WO 2006/059752
Patent Literature 5 : JP 2006 194297
Patent Literature 6 : KR 100 746 989

### Summary of Invention

### Technical Problem

In a typical vacuum thermal insulator, a core formed of a block of fibers, such as glass wool, is sealed in an enclosure, and, to improve the insulation performance of the vacuum thermal insulator, the orientation of the fibers in the core is set perpendicular to or substantially perpendicular to the thickness direction of the vacuum thermal insulator.

However, in the vacuum thermal insulator described in Patent Literature 1, the core (core member) is sealed in the outer wrapping member (enclosure), and the core and the outer wrapping member are clamped with the dies to form a projection. Due to this processing for forming the projection, the fibers in the core (core member) have sometimes been oriented in the thickness direction of the vacuum thermal insulator. If the fibers in the core are oriented in the thickness direction of the vacuum thermal insulator, the heat conduction through the fibers in the core increases, leading to a problem that the insulation performance of the vacuum thermal insulator is deteriorated.

Furthermore, when a flat-plate-shaped vacuum thermal insulator is bent, circumferential lengths become different between the outer circumferential side (outer side) and the inner circumferential side (inner side) of the vacuum thermal insulator, and, to absorb this circumferential length difference, creases have sometimes been formed in the enclosure that is located on the inner circumferential side when bent, and in the core adjacent thereto. If the creases are formed in the core, the fibers in the core are oriented in the thickness direction of the vacuum thermal insulator, increasing the heat conduction through the fibers in the core and leading to a problem that the insulation performance of the vacuum thermal insulator is deteriorated.

Also in the vacuum thermal insulator described in Patent Literature 2, a core is sealed in an outer wrapping member, and a groove is formed by compression-molding the core and the outer wrapping member. Due to this processing for providing a groove, the fibers in the core (core member) are oriented in the thickness direction of the vacuum thermal insulator, leading to a problem that the insulation performance of the vacuum thermal insulator is deteriorated.

The present invention has been made to overcome the above-described problems, and an object thereof is to provide a vacuum thermal insulator that can be easily formed in a curved shape or that can be easily bent, while suppressing deterioration of the insulation performance, and to provide a heat retainer having such a vacuum thermal insulator.

### Solution to the Problem

A vacuum thermal insulator of the present invention includes: a core formed of a single fiber sheet comprising heat insulation fibers extending in a plane direction, or a lamination of a plurality of such fiber sheets; and an enclosure accommodating the core, the vacuum thermal insulator being deformable by bending to have a curved shape at least at a part of the vacuum thermal insulator, the fiber sheet including a plurality of thickness-direction fibers being a part of the heat insulation fibers and extending in a thickness direction of the fiber sheet, the fiber sheet comprising a plurality of fiber recesses provided in at least one surface thereof, configured to satisfy a relationship, t / Px ≤ 1, where t is a thickness of the fiber sheet, and Px is an interval between the thickness-direction fibers and wherein the thickness-direction fibers and the fiber recesses are formed by inserting needles used in a needle-punching method into the fiber sheet.

### Advantageous Effects of the Invention

The vacuum thermal insulator of the present invention can be easily bent because the fiber recesses are provided. Furthermore, because there are the thickness-direction fibers intersecting the lamination surface of the heat insulation fibers,
the movement of the heat insulation fibers is restricted by the thickness-direction fibers. Thus, it is possible to inhibit the heat insulation fibers from being shifted away from the lamination surface and oriented in the thickness direction of the vacuum thermal insulator, and thus to suppress deterioration of the insulation performance.

### Brief Description of the Drawings

- FIG. 1: is a schematic sectional view showing a vacuum thermal insulator according to Embodiment 1 of the present invention.
- FIG. 2: is an enlarged schematic sectional view of a fiber sheet of the vacuum thermal insulator according to Embodiment 1 of the present invention.
- FIG. 3: is an enlarged schematic sectional view of the bent vacuum thermal insulator according to Embodiment 1 of the present invention.
- FIG. 4: is an enlarged schematic sectional view of a fiber sheet of a vacuum thermal insulator according to Comparative Example 3.
- FIG. 5: is a schematic sectional view showing a case where a core of a vacuum thermal insulator according to Embodiment 2 of the present invention is formed of a single fiber sheet.
- FIG. 6: is a schematic perspective view showing a curved vacuum thermal insulator according to Embodiment 3 of the present invention.
- FIG. 7: is a schematic view showing the surface of a fiber sheet of a vacuum thermal insulator according to Embodiment 3 of the present invention.
- FIG. 8: is a schematic perspective view of a hemispherical vacuum thermal insulator according to Embodiment 5 of the present invention.
- FIG. 9: is a schematic view showing the surface of a fiber sheet of the hemispherical vacuum thermal insulator according to Embodiment 5 of the present invention.
- FIG. 10: is a schematic view showing the surface of a fiber sheet of a vacuum thermal insulator different from that in FIG. 9.
- FIG. 11: is an enlarged schematic sectional view of fiber sheets of a vacuum thermal insulator according to Embodiment 6 of the present invention.
- FIG. 12: is a schematic sectional view of a heat-retaining tank according to Embodiment 7 of the present invention.
- FIG. 13: is a chart showing the relationship between the radius of curvature of the vacuum thermal insulator when bent and the amount of heat dissipation, according to Embodiment 8 of the present invention.
- FIG. 14: is an enlarged schematic sectional view of a bent vacuum thermal insulator according to Embodiment 9 of the present invention.

### Description of Embodiments

Embodiments of the present invention will be described below on the basis of the drawings. Note that the present invention is not limited by the embodiments described below. Furthermore, in the drawings below, the dimensional relationships between components may be different from those in actual ones.

### Embodiment 1

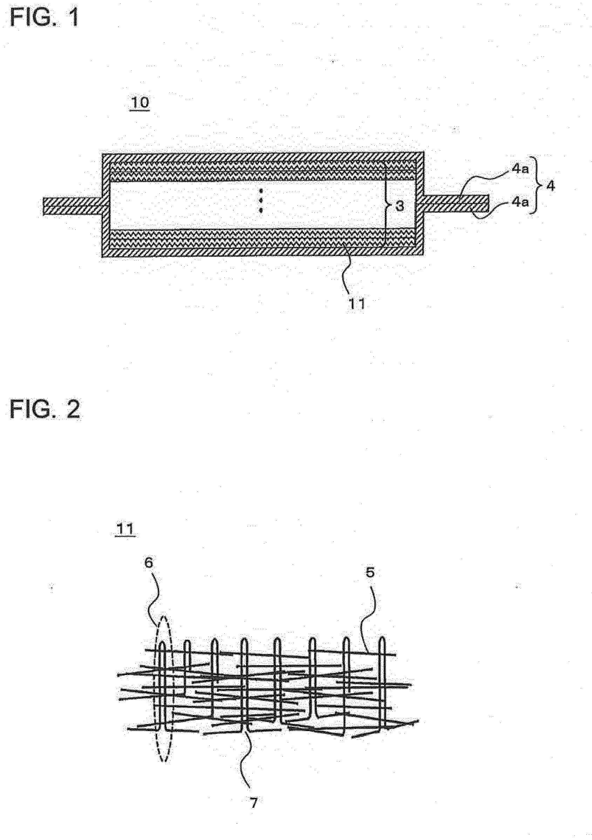

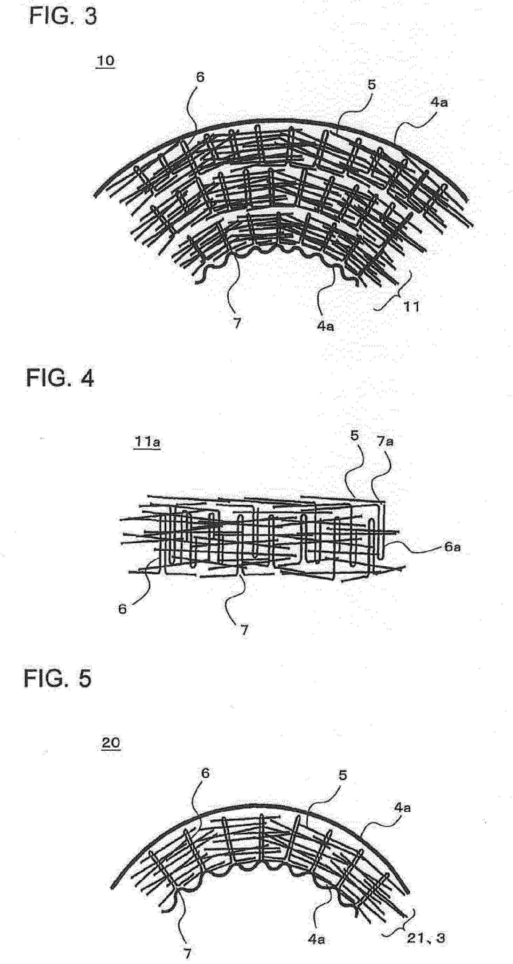

FIG. 1 is a schematic sectional view showing a vacuum thermal insulator 10 according to Embodiment 1 of the present invention. FIG. 2 is an enlarged schematic sectional view of a fiber sheet 11 of the vacuum thermal insulator 10 according to Embodiment 1 of the present invention. FIG. 3 is an enlarged schematic sectional view of the bent vacuum thermal insulator 10 according to Embodiment 1 of the present invention.

As shown in FIG. 1, the vacuum thermal insulator 10 according to Embodiment 1 includes: a core 3, which is formed by laminating fiber sheets 11 including heat insulation fibers 5 formed of glass; and an enclosure 4, which seals the core 3 with outer covering sheets 4a, which are formed of, for example, resin or metal foil. Furthermore, the vacuum thermal insulator 10 before being subjected to bending (bent) has a flat shape.

As shown in FIG. 2, the fiber sheets 11 each include the heat insulation fibers 5 extending in the plane direction (in a sheet-like configuration), and thickness-direction fibers 6 that restrict the movement of the heat insulation fibers 5. The thickness-direction fibers 6 are formed so as to extend in the thickness direction of the fiber sheet 11 (i.e., the up-and-down direction in FIG. 2) and so as to be distributed over the surface of the fiber sheet 11. Note that, although the heat insulation fibers 5 and the thickness-direction fibers 6 intersect each other at right angles because the thickness-direction fibers 6 extend in the thickness direction of the fiber sheet 11, they do not necessarily have to intersect each other at right angles, but may intersect each other at other angles.

The thickness-direction fibers 6 are formed by inserting needles used in a needle-punching method into the fiber sheet 11. As a result of the thickness-direction fibers 6 being formed, fiber recesses 7, which are recessed in the thickness direction of the fiber sheet 11, are formed. In other words, the thickness-direction fibers 6 and the fiber recesses 7 are obtained as a result of the needles being inserted into the fiber sheet 11, making the heat insulation fibers 5 extend in the thickness direction of the fiber sheet 11.

The fiber recesses 7 are formed as a result of the heat insulation fibers 5 that are disposed at the surface, of the surfaces of the fiber sheet 11, from which the needles enter (i.e., the lower side in FIG. 2) being pushed in by the entrance of the needles. The fiber recesses 7 are formed on the inner circumferential side (inner side) in the case where the fiber sheet 11 is bent, and are not formed on the outer circumferential side (outer side) opposite to the inner circumferential side. In other words, the thickness-direction fibers 6 are formed in the shape of a protrusion, and the inner circumferential side of which is open as the fiber recess7.

Note that it is desirable that the fiber recesses 7 be formed so as to have a diameter of, for example, about 0.3 mm to 1.0 mm. Furthermore, the fiber recesses 7 may or may not penetrate through both sides of the fiber sheet 11 when provided. After formation, the fiber recesses 7 are in the surface of the fiber sheet 11 from which the needles have entered, whereas fibers bent in the shape of a protrusion are formed in the surface opposite to the surface from which the needles have entered.

Note that the fiber recesses 7 correspond to "fiber recesses" of the present invention.

As shown in FIG. 1, the core 3 is formed by laminating, from the lower side to the upper side (in FIG. 1), a plurality of fiber sheets 11 that have been cut in a desired size in advance. The core 3 is enclosed (sealed) in the enclosure 4. Note that the number of the fiber sheets 11 laminated and the thickness thereof are set such that the vacuum thermal insulator 10 has a desired thickness in consideration of, for example, the compression strain caused by the difference in pressure between the atmospheric pressure and the vacuum. Note that, depending on the desired thickness of the vacuum thermal insulator and the thickness of the fiber sheet 11, the fiber sheet 11 may be used alone, without being laminated.

The materials of the heat insulation fibers 5 and the thickness-direction fibers 6 are, for example, E glass. When the heat insulation fibers 5 and the thickness-direction fibers 6 are formed, filaments having a diameter of about 6 µm to 20 µm are formed by using, for example, a continuous filament method. Then, the filament is cut to an average length of about 30 mm or more, fabricating chopped fibers (continuous glass fiber). Then, the chopped fibers are opened and distributed in a flat configuration. In this way, a sheet-like member in which the axial direction of the heat insulation fibers 5 is substantially parallel to the plane can be formed.

Thereafter, by using a needle-punching method, some of the heat insulation fibers 5 are formed so as to serve as the thickness-direction fibers 6 that restrict the movement of the heat insulation fibers 5, and the fiber recesses 7 are provided in the sheet-like member. By going through these steps, the fiber sheet 11 can be produced. The thus-produced fiber sheet 11 is, for example, taken up by a roller.

Note that the fibers of the fiber sheet 11 do not necessarily have to be chopped fibers, but may be a continuous fiber formed by bundling a continuous filament and opening it into a flat configuration, or a mixture of continuous fiber and chopped fibers. Furthermore, the fiber sheet 11 does not need to be taken up by a roller, but may be, for example, cut into a predetermined size.

The enclosure 4 accommodates, between the two outer covering sheets 4a, the core 3, which is formed by laminating a plurality of fiber sheets 11 provided with the thickness-direction fibers 6. The enclosure 4 is a laminate structure and includes, for example, in the following order from the outer side to the inner side: an ON (oriented nylon) layer of 25 µm , a PET (polyester) layer of 12 µm, an AL (aluminum) foil layer of 7 µm, and a CPP (cast polypropylene) layer of 30 µm.

Next, a method for producing the vacuum thermal insulator 10 by inserting the core 3 into the enclosure 4 will be described.

First, the enclosure 4 is fabricated in the shape of a bag in advance, using the two outer covering sheets 4a. Then, the core 3 is dried and is then inserted into the enclosure 4, together with a gas absorbing agent. Thereafter, the enclosure 4 is disposed in a vacuum chamber. Then, the pressure inside the vacuum chamber is reduced to a predetermined pressure, for example, a vacuum pressure of about 0.1 to 3 Pa. In this state, the remaining opening of the enclosure 4 is sealed by heat sealing. Finally, by returning the pressure inside the vacuum chamber to the atmospheric pressure and taking the enclosure 4 out of the vacuum chamber, the vacuum thermal insulator 10 is obtained.

Note that, the core 3 may be formed so that they are sandwiched between the two outer covering sheets 4a and disposed in the vacuum chamber, and the pressure inside the vacuum chamber is reduced, and thereafter the peripheries of the upper and lower outer covering sheets 4a may be sealed by heat sealing. Furthermore, to remove moisture contained in the fiber sheets 11, a step of heating in the vacuum process may be provided to remove this moisture, other than a step of heating the fiber sheet 11 before or after cutting.

Furthermore, the enclosure 4 may be heated in advance. Moreover, a gas absorbing agent that is made of, for example, calcium oxide (CaO), zeolite, molecular sieve, iron powder, lithium, barium, or the like may be used alone or in combination so as to share the functions according to the type of the gas to be absorbed, the absorbing speed, etc.

### Comparative Example 1 (Method for Laminating Fiber Sheets)

To achieve low thermal conductivity and to obtain knowledge about the difficulty in sheet formation, a test in the case where the fiber sheets 11 produced by a needle-punching method are used as the core 3 of the vacuum thermal insulator 10 was performed, using the interval between the thickness-direction fibers 6 as a parameter. In Comparative Example 1, three types of fiber sheets were fabricated, in which the intervals between the thickness-direction fibers 6 are:
(1) about 1.5 mm; (2) about 3 mm; and (3) about 4 mm.

Note that, in Comparative Example 1, assuming that there are a first direction parallel to the surface of the fiber sheet and a second direction parallel to the surface and perpendicular to the first direction, the thickness-direction fibers 6 were formed so as to be side-by-side in the first direction and also in the second direction. The distance between the adjacent thickness-direction fibers 6 in the first direction and the distance between the adjacent thickness-direction fibers 6 in the second direction were set equal to each other.

Furthermore, in Comparative Example 1, the fiber diameter, ϕ, of the heat insulation fibers 5 (and the thickness-direction fibers 6) was set to 6 µm, the fiber weight per unit area of the fiber sheet was set to about 240 g/m², and the average thickness of the fiber sheet was set to about 3 mm. Herein, needle-punching was performed only from one side of the fiber sheet. Then, fifteen fiber sheets were laminated in a random manner, regardless of in which surfaces of the fabricated fiber sheets the fiber recesses 7 were provided, three types of vacuum thermal insulators were fabricated by the above-described method, and the thermal conductivities thereof were measured.

As a result, the thermal conductivity of the vacuum thermal insulator in which
(1) the interval between the thickness-direction fibers 6 is about 1.5 mm was 0.0034 W/(m·K), the thermal conductivity of the vacuum thermal insulator in which
(2) the interval between the thickness-direction fibers 6 is about 3 mm was 0.0022 W/(m·K), and
(3) the thermal conductivity of the vacuum thermal insulator in which the interval between the thickness-direction fibers 6 is about 4 mm was 0.0017 W/(m·K).

It may be considered that, because the number of glass fibers oriented in the direction in which fibers are laminated decreases as a result of increasing the interval between the thickness-direction fibers 6, the solid heat conduction (i.e., the heat conduction through the fibers) is suppressed, and the insulation performance can be improved. However, when the interval between the thickness-direction fibers 6 was increased to a value greater than 4 mm, binding of the fibers became insufficient, making sheet formation (fabrication of the fiber sheet) difficult.

### Comparative Example 2

### (Thermal Conductivity When Vacuum Insulation Material Was Bent)

Next, the above-described three types of vacuum thermal insulators were subjected to bending (bent) and evaluated. The vacuum thermal insulators were formed in a curved shape having a radius of curvature of about 190 mm by using a three-point bending roller, and the heat conductivities of the thus-fabricated curved vacuum thermal insulators were measured.

As a result, the thermal conductivity of the vacuum thermal insulator in which (1) the interval between the thickness-direction fibers 6 is about 1.5 mm was 0.0041 W/(m·K), the thermal conductivity of the vacuum thermal insulator in which (2) the interval between the thickness-direction fibers 6 is about 3 mm was 0.0029 W/(m·K), and (3) the thermal conductivity of the vacuum thermal insulator in which the interval between the thickness-direction fibers 6 is about 4 mm was 0.0023 W/(m·K), and thus, it was confirmed that the thermal conductivity was decreased by forming the vacuum thermal insulator in a curved shape.

### Thermal Conductivity of Vacuum Insulation Material 10 according to Embodiment 1

Then, the above-described three types of the vacuum thermal insulators 10 according to Embodiment 1 were fabricated, and their performances were evaluated. First, the fiber sheets 11 were laminated such that the surfaces provided with the fiber recesses 7 by needle-punching face the same direction, and, using these laminate as the cores 3, the vacuum thermal insulators 10 were fabricated. Then, similarly to Comparative Example 2, the vacuum thermal insulators 10 were formed in a curved shape having a radius of curvature of about 190 mm, such that all the fiber recesses 7 in the laminated fiber sheets 11 are distributed on the inner circumferential side, as shown in FIG. 3, and the heat conductivities thereof were measured.

As a result, the thermal conductivity of the vacuum thermal insulator 10 in which
(1) the interval between the thickness-direction fibers 6 is about 1.5 mm was 0.0038 W/(m·K),
(2) the thermal conductivity of the vacuum thermal insulator 10 in which the interval between the thickness-direction fibers 6 is about 3 mm was 0.0026 W/(m·K), and
(3) the thermal conductivity of the vacuum thermal insulator 10 in which the interval between the thickness-direction fibers 6 is about 4 mm was 0.0021 W/(m·K).

Herein, the insulation performance was significantly improved, compared with the vacuum thermal insulators according to Comparative Example 2, in which the fiber sheets 11 were laminated such that the fiber recesses 7 are randomly located on the outer circumferential side and the inner circumferential side. This relates to the fact that the fiber sheets 11 that are bent such that the fiber recesses 7 are distributed on the outer circumferential side are deformed in directions in which the fiber recesses 7 become bigger, along the thickness-direction fibers 6.

In Comparative Example 2, in the fiber sheets that are laminated such that the fiber recesses 7 are located on the outer circumferential side, when the fiber sheets 11 are bent, the spaces in the fiber recesses 7 expand, making gas molecules remaining in the enclosure 4 easy to move in the lamination direction, that is, the heat-transfer direction. This may have increased the effect of gas heat conduction, and consequently, have increased the thermal conductivities of the vacuum thermal insulators according to Comparative Example 2.

In other words, it may be considered that, in the vacuum thermal insulators according to Comparative Example 2, in which the fiber sheets 11 were laminated in a random manner, because (a large number of) fiber sheets 11 having the fiber recesses 7 distributed on the outer circumferential side were contained, the thermal conductivities thereof were high.

In contrast, it may be considered that, in the vacuum thermal insulator 10 according to Embodiment 1, in which the surfaces provided with the fiber recesses 7 were located on the inner circumferential side of the fiber sheets 11, because the fiber recesses 7 are urged in directions in which they are closed due to the difference between the inner and outer circumferential lengths caused when bending is performed, the gas heat conduction was suppressed, and consequently, the performance was improved.

### Comparative Example 3 (Surface in Which Recessed Fiber Holes 7 Are Formed)

FIG. 4 is an enlarged schematic sectional view of a fiber sheet 11a of a vacuum thermal insulator according to Comparative Example 3.

Next, Comparative Example 3 will be described, using FIG. 4.

In Comparative Example 3 shown in FIG. 4, the fiber recesses 7 are formed in one surface of the fiber sheet 11a, and second fiber recesses 7a are formed in the other surface. Corresponding to them, in the fiber sheet 11a, the thickness-direction fibers 6, which are recessed from the one surface toward the other surface, and second thickness-direction fibers 6a, which are recessed from the other surface toward the one surface, are provided.

In other words, in Comparative Example 3, needle-punching was performed on both surfaces of the fiber sheet 11a. In Comparative Example 3, the fiber sheet 11a having specification according to (2) of Comparative Example 1 was fabricated. More specifically, because needle-punching was performed from both surfaces, the interval between the thickness-direction fibers 6 on each side was set to about 6 mm, which is substantially equal to the specification of the fiber sheet in which needle-punching was performed only on one side, and the interval between the thickness-direction fibers 6 was about 3 mm.

As a result, the thermal conductivity of the flat-plate-shaped vacuum thermal insulator 10 was 0.0022 W/(m·K), which is substantially the same as the result obtained with the sample formed in Embodiment 1. However, when the vacuum thermal insulator 10 was formed in a curved shape, the thermal conductivity thereof became 0.0028 W/(m·K), which is close to the result obtained when the fiber sheets were laminated in a random manner, as described in Comparative Example 2, and deterioration of the insulation performance related to the thermal conductivity of the vacuum thermal insulator was observed. The reason for this may be considered that, as described above, when the fiber recesses 7 are located on the outer circumferential side, as a result of bending, spaces that allow gas to easily move are formed, increasing the gas heat conduction, and consequently, decreasing the insulation performance.

Note that the thermal conductivity of the flat-plate-shaped vacuum thermal insulator was measured with a thermal conductivity meter manufactured by EKO Instruments. Furthermore, the thermal conductivity of the curved vacuum thermal insulator was measured by producing a device that work on the same measurement principle as the above-described thermal conductivity meter, the device sandwiching the vacuum thermal insulator between curved heat flux sensors, one of which is provided with a heating part and the other of which is provided with a cooling part, and on the basis of the relationship between the amount of heat transfer and the thickness, using a steady state method.

### Comparative Example 4 (Weight per Unit Area of Fiber Sheet)

Assuming that the binding strength of the fiber sheet is typically the tensile strength in the plane direction, the tensile strength is considered to increase as the thickness increases. Hence, fiber sheets in which the interval between the thickness-direction fibers 6 was set to 3 mm, as in the condition in (2), and which have different weights per unit area, that is, a thickness of about 8 mm and a thickness of about 11 mm, were fabricated. Then, the fiber sheets were laminated to form cores 3, and the thermal conductivities of the vacuum thermal insulators having the cores 3 were measured.

As a result, the vacuum thermal insulator in which the thickness of the fiber sheet is about 8 mm in a flat plate state had a thermal conductivity of 0.0027 W/(m·K), and the vacuum thermal insulator in which the thickness of the fiber sheet is about 11 mm had a thermal conductivity of 0.0030 W/(m·K).The reason for this may be considered that, if the fiber sheet has a large thickness, the heat insulation fibers 5 constituting the fiber sheet tend to be inclined in the lamination direction (thickness direction), increasing the solid heat conduction from the heat insulation fibers 5.

Next, fabrication of a fiber sheet in which the thickness of the fiber sheet is about 8 mm and the interval between the thickness-direction fibers 6 is 8 mm was attempted. As described in Comparative Example 1, when the thickness of the fiber sheet was 3 mm, and the interval between the fiber recesses 7 was 8 mm, sheet formation was difficult. However, when the thickness of the fiber sheet was about 8 mm, and the interval between the thickness-direction fibers 6 was 8 mm, sheet formation was successful.

As a result of forming a vacuum thermal insulator using this fiber sheet, and measuring the thermal conductivity thereof, the vacuum thermal insulator had a thermal conductivity of 0.0023 W/(m·K) in a flat plate shape. The reason for this may be considered that, by increasing the thickness of the fiber sheet, the interval between the thickness-direction fibers 6, which bind the fibers together, was increased.

From these results, it was confirmed that, when the relationship among the thickness, t, of the fiber sheet 11, the interval, Px, between the thickness-direction fibers 6, and the thermal conductivity was sorted out, and, when a thermal conductivity of 0.0025 W/(m·K) or less was set as performance criteria, by satisfying t / Px ≤ 1, the performance was improved.

From these facts, the vacuum thermal insulator 10 according to Embodiment 1 not only can achieve a low thermal conductivity with a flat plate shape, but also can suppress deterioration of the thermal conductivity, even when it is formed in a curved shape. Accordingly, for example, it is possible to suppress heat dissipation from the body of a curved hot-water-storage tank, which is used for, for example, a boiler system or a heating system, and to achieve an efficient system.

### Advantageous effects of Vacuum Insulation Material 10 according to Embodiment 1

The vacuum thermal insulator 10 according to Embodiment 1 can be easily bent because the fiber recesses 7 are provided. Furthermore, because there are the thickness-direction fibers 6 intersecting the lamination surface of the heat insulation fibers 5, the movement of the heat insulation fibers 5 is restricted by the thickness-direction fibers 6. Thus, it is possible to inhibit the heat insulation fibers 5 from being shifted away from the lamination surface and oriented in the thickness direction, and thus to suppress deterioration of the insulation performance.

Moreover, because the surface of the fiber sheet 11 in which the fiber recesses 7 are distributed is formed so as to be located on the inner circumferential side of the vacuum thermal insulator 10, when the vacuum thermal insulator 10 is bent, the fiber recesses 7 become small, and thus, deterioration of the insulation performance due to gas heat conduction can be suppressed.

Furthermore, because the vacuum thermal insulator 10 according to Embodiment 1 is configured such that the relationship between the thickness, t, of the fiber sheet 11 and the interval, Px, between the thickness-direction fibers 6 satisfies the relation t / Px ≤ 1, the insulation performance is improved even more.

### Embodiment 2

Embodiment 2 of the present invention will be described below, focusing on the difference from Embodiment 1. Explanations that overlap those of Embodiment 1 will be (partially) omitted, and the components the same as or corresponding to those in Embodiment 1 will be denoted by the same reference signs.

FIG. 5 is a schematic sectional view showing a case where the core 3 of a vacuum thermal insulator 20 according to Embodiment 2 of the present invention is formed of a single-layer of a fiber sheet 21.

As shown in FIG. 5, the core 3 of the vacuum thermal insulator 20 according to Embodiment 2 is formed of a single fiber sheet 21, in which the thickness-direction fibers 6 are formed.

### Advantageous effects of Vacuum Insulation Material 20 according to Embodiment 2

The vacuum thermal insulator 20 according to Embodiment 2 has the following advantageous effects, in addition to the same advantageous effects as those provided by the vacuum thermal insulator 10 according to Embodiment 1.

In the vacuum thermal insulator 20 according to Embodiment 2, because the fiber sheet 21 is fabricated in a desired thickness, and the core 3 is formed of a single fiber sheet 21, a step of laminating the fiber sheets 21 is unnecessary. In addition, although there is a possibility of the heat insulation fibers 5 being inclined in the heat-transfer direction (thickness direction) due to a large thickness of the fiber sheet 21, the curved vacuum thermal insulator 20 can be produced at lower cost.

### Embodiment 3

Embodiment 3 of the present invention will be described below, focusing on the difference from Embodiments 1 and 2. Explanations that overlap those of Embodiments 1 and 2 will be (partially) omitted, and the components the same as or corresponding to those in Embodiments 1 and 2 will be denoted by the same reference signs.

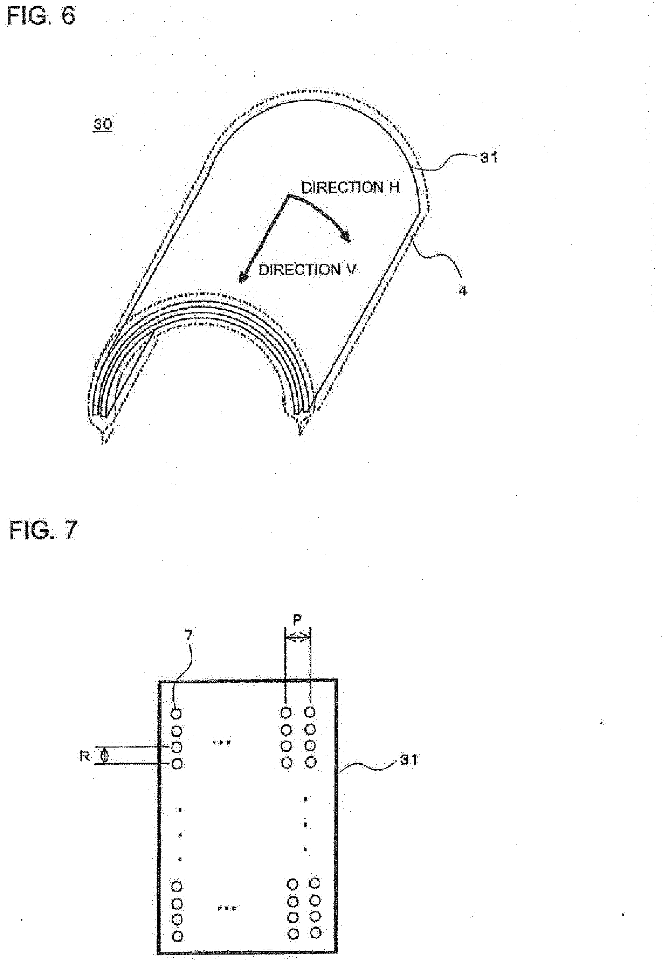

FIG. 6 is a schematic perspective view showing a curved vacuum thermal insulator 30 according to Embodiment 3 of the present invention, and FIG. 7 is a schematic view showing the surface of a fiber sheet 31 of the vacuum thermal insulator 30 according to Embodiment 3 of the present invention.

Note that, in FIG. 6, a direction in which the curved vacuum thermal insulator 30 is bent (i.e., a bending direction of the vacuum thermal insulator 30) is referred to as a direction H, a direction perpendicular to the direction H (i.e., the axial direction of a cylinder) is referred to as a direction V, and the enclosure 4 is illustrated in dashed lines. Furthermore, FIG. 7 shows a state in which the fiber recesses 7 are distributed over the surface of the fiber sheet 31. Of two directions perpendicular to each other, a plurality of fiber recesses 7 are provided at an interval P in one direction, and a plurality of fiber recesses 7 are provided at an interval R in the other direction. The relationship between P and R is R < P.

In Embodiment 3, a sample formation was attempted, in which needle-punching, with the interval P being about 6mm and the interval R being about 3 mm, was performed only on one side of the fiber sheet 31 having a glass fiber diameter ϕ of 6 µm, a weight per unit area of about 240 g/m , and an average thickness of 3 mm, which are the same conditions as those in Embodiment 1. Herein, sheet formation was possible when the direction in which the fiber recesses 7 are provided at the interval R was aligned with the direction in which the fiber sheet 31 was fed by, for example, a conveyer and a roll winding apparatus when needle-punching was performed.

However, sheet formation was not successful when the direction in which the fiber recesses 7 are provided at the interval P was aligned with the direction in which the fiber sheet 31 was fed, because the binding strength of the fibers was insufficient. Hence, the successfully formed fiber sheets 31 were laminated such that the surfaces provided with the fiber recesses 7 face the same direction to form the core 3, and the vacuum thermal insulator 30 was fabricated.

Next, the vacuum thermal insulator 30 was bent to a radius of curvature of 190 mm, such that the fiber recesses 7 were located on the inner circumferential side of the curved vacuum thermal insulator 30. At this time, two types of samples are fabricated, which are:
(1) a vacuum thermal insulator 30 in which the direction in which the fiber recesses 7 are provided at the interval R is the direction H, and the direction in which the fiber recesses 7 are provided at the interval P is the direction V; and
(2) a vacuum thermal insulator 30 in which the direction in which the fiber recesses 7 are provided at the interval R is the direction V, and the direction in which the fiber recesses 7 are provided at the interval P is the direction H, and their thermal conductivities were measured. At this time, the number of the fiber recesses 7 per unit area of the fiber sheet 31 was constant.

As a result, the thermal conductivity of (1) the vacuum thermal insulator 30 of was 0.0018 W/(m·K), and the thermal conductivity of (2) the vacuum thermal insulator 30 of was 0.0020 W/(m·K). Hence, it is understood that it is desirable that the fiber recesses 7 be provided at different intervals between the bending direction of the fiber sheet 31 (direction H) and the direction perpendicular to the bending direction (direction V), and the core 3 be formed by forming the vacuum thermal insulator 30 in a curved shape such that the direction in which the fiber recesses 7 are provided at the smaller interval be aligned with the bending direction of the fiber sheet 31 (direction H).

Specifically, by forming the fiber recesses 7 so as to satisfy R < P, by aligning the direction in which the fiber recesses 7 are provided at the interval P with the direction V, and by aligning the direction in which the fiber recesses 7 are provided at the interval R with the direction H, even higher insulation performance can be obtained.

The reason for this may be considered that, because the number of thickness-direction fibers 6 per unit area of the fiber sheet 31 in the vacuum thermal insulator 30 according to Embodiment 3 was smaller than that in the vacuum thermal insulator 10 according to Embodiment 1, in which the interval between the thickness-direction fibers 6 is about 3 mm, the solid heat conduction was suppressed.

Another reason may be considered that, because, when the vacuum thermal insulator 30 was formed in a curved shape, the vacuum thermal insulator 30 was bent such that bending occurs at the thickness-direction fibers 6, formation of deep creases on the inner circumferential side was suppressed, reducing the proportion of the heat insulation fibers 5 in the fiber sheet 31, which constitutes the core 3, inclined in the heat-transfer direction (the thickness direction or the lamination direction), and hence suppressing the solid heat conduction. Accordingly, the vacuum thermal insulator 30 according to Embodiment 3 is less likely to decrease in thermal conductivity and has high performance, even when it is formed in a curved shape.

Furthermore, when the vacuum thermal insulator 30 employing the fiber sheet 31 that satisfies R < P was processed in a curved shape having a radius of curvature of 85 mm, a curved vacuum thermal insulator 30 having very few creases on the inner circumferential surface was achieved. From this result, even if a vacuum thermal insulator 30 that is curved to a large radius of curvature is fabricated, high insulation performance can be ensured.

### Advantageous effects of Vacuum Insulation Material 30 according to Embodiment 3

The vacuum thermal insulator 30 according to Embodiment 3 has the following advantageous effects, in addition to the same advantageous effects as those provided by the vacuum thermal insulator 10 according to Embodiment 1.

In the vacuum thermal insulator 30 according to Embodiment 3, a plurality of fiber recesses 7 are provided in the surface of the fiber sheet 31 at the interval P (which is larger than the interval R) in the direction V perpendicular to the direction H, which is the bending direction of the vacuum thermal insulator 30. By doing so, the number of thickness-direction fibers 6 per unit area of the fiber sheet 31 is reduced, making it possible to suppress deterioration of the insulation performance due to solid heat conduction.

Furthermore, because, when the vacuum thermal insulator 30 is formed in a curved shape, bending is performed such that bending occurs at the thickness-direction fibers 6, formation of deep creases on the inner circumferential side is suppressed, reducing the proportion of the heat insulation fibers 5 in the fiber sheet 31, which constitutes the core 3, inclined in the heat-transfer direction, and hence suppressing a decrease in heat transfer efficiency. Moreover, because the vacuum thermal insulator 30 is bent such that bending occurs at the thickness-direction fibers 6, for example, the vacuum thermal insulator 30 can be formed in a curved shape having a large radius of curvature, such as, for example, a radius of curvature of 85 mm.

### Embodiment 4

Embodiment 4 of the present invention will be described below, focusing on the difference from Embodiments 1 to 3. Explanations that overlap those of Embodiments 1 to 3 will be (partially) omitted, and the components the same as or corresponding to those in Embodiments 1 to 3 will be denoted by the same reference signs.

In Embodiment 4, when a filament bundle is opened, and the fibers are spread into a flat laminated structure to fabricate a fiber sheet, the proportion of the heat insulation fibers 5 oriented in a first proportion direction, which is parallel to the surface of the fiber sheet, is differentiated from the proportion of the heat insulation fibers 5 oriented in a second proportion direction, which is parallel to the surface of the fiber sheet and is perpendicular to the first proportion direction. The core 3 is formed by laminating the fiber sheets such that their first proportion directions are aligned with one another and their second proportion directions are aligned with one another.

In Embodiment 4, a vacuum thermal insulator was fabricated using the same method as in Embodiment 3, and the vacuum thermal insulator was formed in a curved shape having a radius of curvature of 190 mm. Herein, the direction in which a lower proportion of fibers are oriented is the direction in which the vacuum thermal insulator is easily bent. Hence, in the vacuum thermal insulator, the direction H shown in FIG. 6 is the direction in which a lower proportion of fibers are oriented, and the direction V is the direction in which a higher proportion of fibers are oriented. As a result of measuring the thermal conductivity of this curved vacuum thermal insulator, a thermal conductivity of 0.0017 W/(m·K) was obtained.

### Advantageous Effects of Vacuum Insulation Material according to Embodiment 4

The vacuum thermal insulator according to Embodiment 4 has the following advantageous effects, in addition to the same advantageous effects as those provided by the vacuum thermal insulator 10 according to Embodiment 1.

In the vacuum thermal insulator according to Embodiment 4, the core 3 is formed by laminating the fiber sheets such that their first proportion directions are aligned with one another and their second proportion directions are aligned with one another, and the direction in which a lower proportion of fibers are oriented is set to the direction H, and the direction in which a higher proportion of fibers are oriented is set to the direction V.

By doing so, even when the vacuum thermal insulator is formed in a curved shape, the heat insulation fibers 5 themselves are less likely to be subjected to a load during bending. Thus, the heat insulation fibers 5 are less likely to be inclined in the heat-transfer direction, whereby the solid heat conduction is suppressed even more, and deterioration of the insulation performance can be suppressed.

### Embodiment 5

Embodiment 5 of the present invention will be described below, focusing on the difference from Embodiments 1 to 4. Explanations that overlap those of Embodiments 1 to 4 will be (partially) omitted, and the components the same as or corresponding to those in Embodiments 1 to 4 will be denoted by the same reference signs.

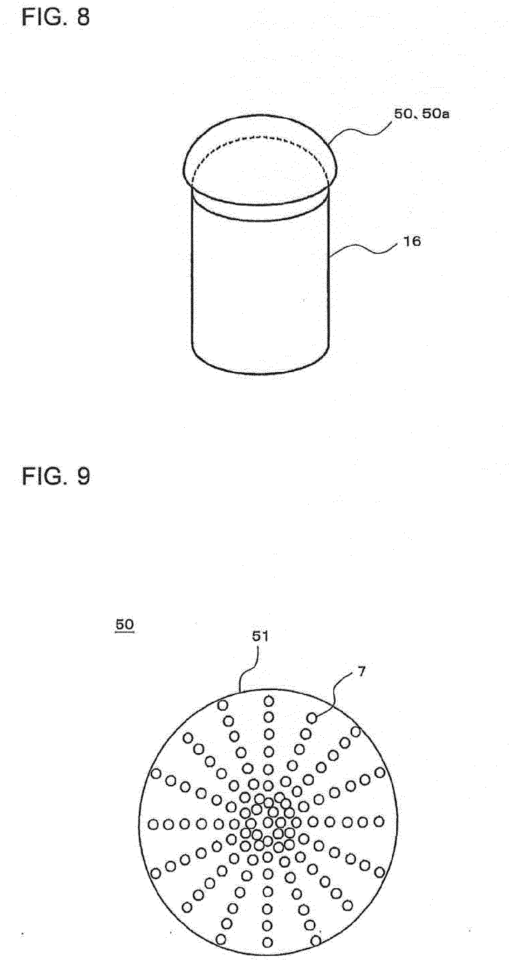

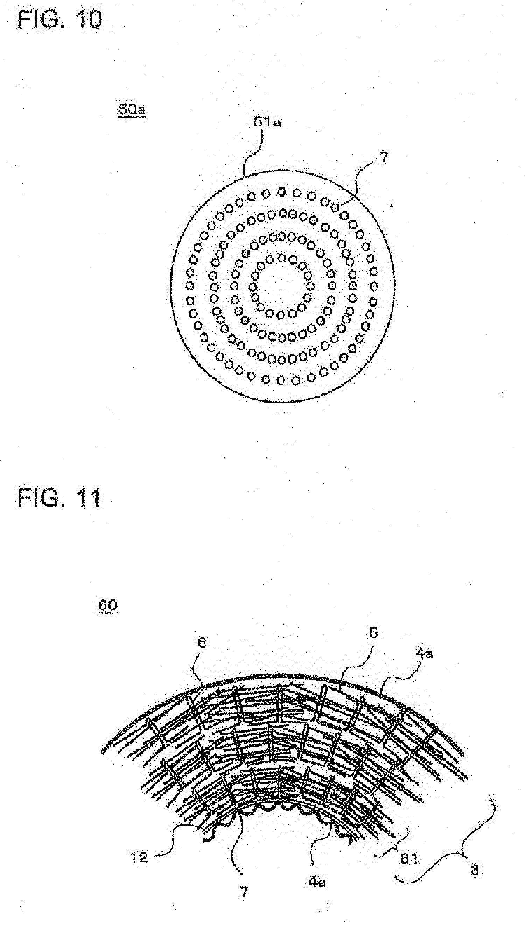

FIG. 8 is a schematic perspective view of a hemispherical vacuum thermal insulator 50 according to Embodiment 5 of the present invention, FIG. 9 is a schematic view showing the surface of a fiber sheet 51 of the hemispherical vacuum thermal insulator 50 according to Embodiment 5 of the present invention, and FIG. 10 is a schematic view showing the surface of a fiber sheet 51a of a vacuum thermal insulator 50a, which is different from that in FIG. 9.

As shown in FIG. 8, the vacuum thermal insulator 50 according to Embodiment 5 is formed in a hemispherical shape (a hemispherical shell shape) and is disposed so as to cover an end plate part of an object 16 to be kept warm, which stores a heat medium. That is, the cores 3 of the vacuum thermal insulators 50 and 50a are formed in a hemispherical shape. Furthermore, the objet 16 to be kept warm and the vacuum thermal insulator 50 together constitute a heat retainer.

The fiber recesses 7 are distributed in a radial pattern way from the center, as shown in FIG. 9, and in a pattern of concentric circles around the center, as shown in FIG. 10, respectively, over the surfaces of the fiber sheets 51 and 51a, on the inner circumferential side when bent. Note that the distribution of the fiber recesses 7 in the fiber sheets 51 and 51a in a radial pattern and a pattern of concentric circles, respectively, is centered at the apex of the hemisphere.

First, by laminating these fiber sheets 51 and 51a such that the fiber recesses 7 are laminated in the same direction, samples of flat-plate-shaped vacuum thermal insulators 50 were fabricated. Next, the flat-plate-shaped vacuum thermal insulators 50 were pressed into a hemispherical shape, such that the fiber recesses 7 are located on the inner circumferential side.

The radius of the hemisphere at this time was set to about 190 mm. With typical conventional vacuum thermal insulators, such as a wet-process glass fiber sheet, which is formed of short glass fibers by using a paper-making method, and a dry-process glass fiber sheet, in which molten glass is formed into glass fibers by centrifugation using a spinner, a smooth end plate shape could not be achieved. However, with Embodiment 5, both samples could be formed in a hemispherical shape having a curved shape.

Furthermore, although, as a reference, the vacuum thermal insulators 50 and 50a were formed into a hemispherical shape such that the fiber recesses 7 were located on the outer circumferential side, the creases formed on the inner circumferential side of the vacuum thermal insulators 50 and 50a were deeper than those in the case where the fiber recesses 7 were located on the inner circumferential side. The reason for this may be considered that the spaces in the fiber recesses 7 had an effect of absorbing the difference between the inner and outer circumferential lengths of the vacuum thermal insulators 50 and 50a caused when bending was performed.

Furthermore, as shown in Embodiment 1, because the movement of the gas remaining in the vacuum thermal insulators 50 and 50a can be suppressed even more with the configuration in which the fiber recesses 7 are formed on the inner circumferential side, this configuration is considered to be desirable, also from the standpoint of the insulation performance.

### Advantageous effects of Vacuum Insulation Materials 50 and 50a according to Embodiment 5

The vacuum thermal insulators 50 and 50a according to Embodiment 5 have the following advantageous effects, in addition to the same advantageous effects as those provided by the vacuum thermal insulator 10 according to Embodiment 1.

The vacuum thermal insulators 50 and 50a according to Embodiment 5 are formed in a hemispherical shape, and the fiber recesses 7 in the fiber sheets 51 and 51a are distributed in a radial pattern and a pattern of concentric circles, respectively, centered at the apex of the hemisphere. Even with these shapes, deterioration of the insulation performance of the vacuum thermal insulators 50 and 50a can be suppressed.

Hence, it is possible to attach the vacuum thermal insulators 50 and 50a to the end plate part, which serves as the ceiling of the objet 16 to be kept warm, where the temperature tends to be high, and thus to effectively suppress the heat dissipation from the objet 16 to be kept warm. Therefore, when, for example, the objet 16 to be kept warm constitutes a part of a boiler system, the efficiency of the boiler system can be improved.

Note that, in Embodiment 5, although the fiber recesses 7 in the surfaces of the fiber sheets 51 and 51a are arranged in a radial pattern and a pattern of concentric circles, respectively, the fiber recesses 7 in the surfaces of the fiber sheets 51 and 51a may be arranged in a pattern including both radial pattern and pattern of concentric circles. Also with such a configuration, it is possible to obtain the same advantageous effects as those obtained when the fiber recesses 7 in the surfaces of the fiber sheets 51 and 51a are arranged in a radial pattern and a pattern of concentric circles, respectively, and to achieve high flexibility.

### Embodiment 6

Embodiment 6 of the present invention will be described below, focusing on the difference from Embodiments 1 to 5. Explanations that overlap those of Embodiments 1 to 5 will be (partially) omitted, and the components the same as or corresponding to those in Embodiments 1 to 5 will be denoted by the same reference signs.

FIG. 11 is an enlarged schematic sectional view of fiber sheets 61 of a vacuum thermal insulator 60 according to Embodiment 6 of the present invention.

In the vacuum thermal insulator 60 according to Embodiment 6, as shown in FIG. 11, a slide film 12, which reduces friction, is inserted between the inner circumferential surface of the core 3 and the outer covering sheet 4a. The other configurations are the same as those of the vacuum thermal insulator 10 according to Embodiment 1.

The provision of the slide film 12 between the inner circumferential surface of the core 3 (the fiber sheet 11 on the inner circumferential side) and the enclosure 4 makes the laminated fiber sheet 11, which has high porosity and has flexibility, and the enclosure 4, which has almost no flexibility, less likely to be constrained by each other when bent. Owing to the provision of this slide film 12, it is possible to suppresses local flexure of the fiber sheet 61, even when bending with a large radius of curvature is performed, as in the vacuum thermal insulator 60.

The slide film 12 is formed of a single, low-friction-coefficient film, such as a PET film, or of a plurality of such films laminated on one another, and the thickness of the slide film 12 may be, for example, 100 µm or less. Note that, when a plurality of slide films 12 are laminated, due to sliding between the individual films, the friction (stress) occurring between the fiber sheet 61 and the enclosure 4 during bending can be reduced. Furthermore, although the fibers of the fiber sheet 61 may stand up at the creases produced by bending the vacuum thermal insulator 60, by providing the slide film 12 between the fiber sheet 61 and the enclosure 4, standing up of the fibers of the fiber sheet 61 may be suppressed.

The insulation performance of the thus-fabricated vacuum thermal insulator 60 according to Embodiment 6 was evaluated in the same way as in Embodiment 1. A vacuum thermal insulator 60 was fabricated, in which a PET film having the same planar size as the fiber sheet 11 and having a thickness of 50 µm was disposed on the surface of the fiber sheet 61 provided with the fiber recesses 7, the surface being located on the inner circumferential side when bending was performed.

When a vacuum thermal insulator without the slide film 12 was bent to a radius of curvature of 50 mm, the core 3 flexed entirely in the radial direction, in the surface located on the inner circumferential side when bending was performed. However, this phenomenon was not observed in the vacuum thermal insulator 60 in which the slide film 12 was inserted.

### Advantageous effects of Vacuum Insulation Material 60 according to Embodiment 6

The vacuum thermal insulator 60 according to Embodiment 6 has the following advantageous effects, in addition to the same advantageous effects as those provided by the vacuum thermal insulator 10 according to Embodiment 1.

In the vacuum thermal insulator 60 according to Embodiment 6, because the low-friction-coefficient slide film 12 is provided between the inner circumferential surface of the core 3 and the enclosure 4, even when the vacuum thermal insulator 60 is bent to large radius of curvature, the friction between the core 3 and the enclosure 4 is reduced, and the ease of sliding is improved. Thus, it is possible to suppress formation of a significantly flexed part. Note that, also in a part having a small radius of curvature, the same advantageous effects can be obtained by using the vacuum thermal insulator 60.

### Embodiment 7

Embodiment 7 of the present invention will be described below, focusing on the difference from Embodiments 1 to 6. Explanations that overlap those of Embodiments 1 to 6 will be (partially) omitted, and the components the same as or corresponding to those in Embodiments 1 to 6 will be denoted by the same reference signs.

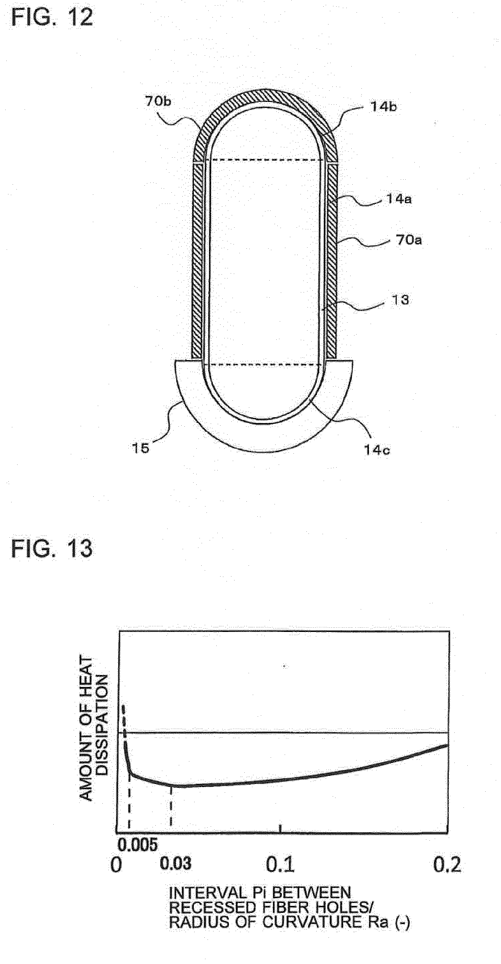

FIG. 12 is a schematic sectional view of a heat-retaining tank 13 according to Embodiment 7 of the present invention.

In Embodiment 7, as shown in FIG. 12, a cylindrical vacuum thermal insulator 70a is wound around substantially the entirety of the outer circumference of a tank body part 14a of a cylindrical heat-retaining tank 13, which stores a heat medium. Furthermore, a tank upper-end-plate part 14b is covered with a curved vacuum thermal insulator 70b, and a tank lower-end-plate part 14c is covered with a curved non-vacuum thermal insulator 15. The heat-retaining tank 13 and the vacuum thermal insulators 70a and 70b (and the non-vacuum thermal insulator 15) together constitute the heat retainer.

The vacuum thermal insulators 70a and 70b had the same specification as those shown in Embodiments 3 and 5, and the fabrication method was performed according to the steps shown in Embodiment 1. The non-vacuum thermal insulator 15 is an EPS (bead method polystyrene foam) insulation material and is formed so as to conform to the shape of the tank lower-end-plate part 14c, which is at the bottom of the heat-retaining tank 13.

The heat-retaining tank 13 is filled with water, which is boiled by a heat source (not shown). Examples of the heat source include a method in which water is directly heated by an electric heater provided inside the heat-retaining tank 13, an indirect heating method using water circulated from another heat source, such as an exhaust heat recovery system of, for example, a fuel-cell power generation system.

Heat dissipation was actually evaluated in the environment in which the outside air was set to 4 °C, using a heat-retaining tank 13 having a barrel diameter of 600 mm and a capacity of 370 L, which was filled with hot water of 90 °C by an electric heater. First, the vacuum thermal insulators 70a and 70b having a thickness of 8 mm and the non-vacuum thermal insulator 15 having a thickness of 50 mm were used as the insulation materials of the heat-retaining tank 13, and the amount of heat dissipation from the heat-retaining tank 13 was measured before and after the elapse of eight hours.

Next, the tank upper-end-plate part 14b was changed to the non-vacuum thermal insulator 15 (the others were not changed), and the amount of heat dissipation from the heat-retaining tank 13 was measured before and after the elapse of eight hours. Then, the amounts of heat dissipation were compared. As a result, it was confirmed that the total amount of heat dissipation was lower by about 10 % in the case where the insulation material of the tank upper-end-plate part 14b was formed of the vacuum thermal insulator 70b than in the case where the tank upper-end-plate part 14b was formed of the non-vacuum thermal insulator 15.

Thus, in the heat-retaining tank 13 according to Embodiment 7, the vacuum thermal insulator 70b may be applied to the tank upper-end-plate part 14b, and, because the amount of heat dissipation is reduced, a cylindrical heat-retaining tank 13 having high insulation performance against the outside air can be achieved.

Note that the arrangement of the insulation materials is not limited to this example, and, to prevent heat leakage from gaps present at parts where the insulation materials are joined, it is desirable that additional insulation materials be provided at necessary parts.

Furthermore, the non-vacuum thermal insulator 15 is not limited to the aforementioned one, but may be, for example, an insulation material such as glass wool.

Note that, although examples in which the fibers of the fiber sheets are glass fiber have been described also in Embodiments 1 to 6 described above, the fibers of the fiber sheets do not necessarily have to be the glass fiber, but may be fibers of a polymeric material, such as polyester, polypropylene, or polystyrene. When the fibers of the fiber sheets are made of such a polymeric material, for example, a spunbonding method may be used, in which plastic pellets are melted, extruded from nozzles, and drawn, while being cooled, into fibers by using, for example, an ejector.

The thus-formed fibers are gathered on a belt conveyor and formed into a light weight sheet (thin sheet). The sheet is then subjected to needle-punching and formed into a fiber sheet and then into a sheet roll. As has been described, even when the fibers of the fiber sheets are made of a polymeric material, similar fiber sheets can be fabricated.

### Advantageous Effects of Heat-Retaining Tank 13 according to Embodiment 7

The heat-retaining tank 13 (heat retainer) covered with the vacuum thermal insulators 70a and 70b according to Embodiment 7 has the same advantageous effects as those provided by Embodiments 1 to 6.

### Embodiment 8

Embodiment 8 of the present invention will be described below, focusing on the difference from Embodiments 1 to 7. Explanations that overlap those of Embodiments 1 to 7 will be (partially) omitted, and the components the same as or corresponding to those in Embodiments 1 to 7 will be denoted by the same reference signs.

FIG. 13 is a chart showing the relationship between the radius of curvature of the vacuum thermal insulator when bent and the amount of heat dissipation, according to Embodiment 8 of the present invention. Note that FIG. 13 shows an anticipated relationship between the amount of heat dissipation and the proportion of an interval Pi between the fiber recesses 7 in the bending direction of the vacuum thermal insulator (direction H) in the radius of curvature Ra when the vacuum thermal insulator is bent. Herein, the interval between the fiber recesses 7 in the direction V of the fiber recesses 7 is constant. Specifically, when the vacuum thermal insulator is bent, the number of fiber recesses 7 per unit area of the fiber sheet 11 is not constant.

For example, it is understood that, when the vacuum thermal insulator is bent into a curved shape as shown in FIG. 6, if the radius of curvature is small, in an area where Pi / Ra is greater than substantially 0.03, the amount of heat dissipation increases unless the interval between the fiber recesses 7 is reduced, and the insulation performance tends to be deteriorated.

The main factor of this is considered that, if the interval between the fiber recesses 7 is large, when the vacuum thermal insulator is bent to a small radius of curvature, compared with a case where the vacuum thermal insulator is bent to a large radius of curvature, the vacuum thermal insulator is bent in a polygonal shape, leaving gaps between the vacuum thermal insulator and the object to be insulated, which facilitates heat transfer.

Another main factor is considered that, because, at portions close to the corners of the polygonal shape, the fibers are inclined in the radial direction of an object to which the vacuum thermal insulator is attached (i.e., the thickness direction of the vacuum thermal insulator), the solid heat conduction through the fibers inside the vacuum thermal insulator increases.

Furthermore, when Pi / Ra exceeds 0.2, the influence of these factors becomes more significant, increasing the amount of heat dissipation. Meanwhile, also in an area where Pi / Ra is small, the amount of heat dissipation increases, and, in particular, in an area where Pi / Ra is smaller than 0.005, the amount of heat dissipation sharply increases.

This is because, as the number of the fiber recesses 7 per unit area increases, the solid heat conduction from the thickness direction fibers 6 of the vacuum thermal insulator increases. Hence, by setting Pi / Ra to 0.005 to 0.2, it is possible to reduce the amount of heat dissipation and to achieve a curve-shaped vacuum thermal insulator having high insulation performance. To obtain even higher insulation performance, it is desirable to set Pi / Ra to 0.007 to 0.15, without the margin.

Note that, as described above, in the fabrication of the fiber sheets 11, depending on the thickness of the sheets and the length of the fibers, limiting conditions that can be associated with the interval between the fiber recesses 7 are established. In other words, the range of Pi / Ra shown herein does not indicate the range in which the fiber sheets 11 can be produced.

### Advantageous effects of Vacuum Insulation Material according to Embodiment 8

In the vacuum thermal insulator according to Embodiment 8, by setting Pi / Ra to 0.005 to 0.2, it is possible to reduce the amount of heat dissipation and to achieve high insulation performance according to the radius of curvature of the bending.

### Embodiment 9

Embodiment 9 of the present invention will be described below, focusing on the difference from Embodiments 1 to 8. Explanations that overlap those of Embodiments 1 to 8 will be (partially) omitted, and the components the same as or corresponding to those in Embodiments 1 to 8 will be denoted by the same reference signs.

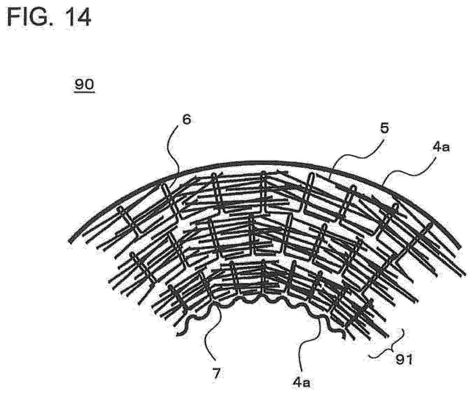

FIG. 14 is an enlarged schematic sectional view of a bent vacuum thermal insulator 90 according to Embodiment 9 of the present invention.

In Embodiment 9, the core 3 is formed by laminating a plurality of fiber sheets 91, and the interval between the fiber recesses 7 in the bending direction is larger in the fiber sheet 91 located on the outer circumferential side than in the fiber sheet 11 located on the inner circumferential side.

When the core 3 has a laminated structure (i.e., a structure in which a plurality of fiber sheets 91 are laminated), the radius of curvature of the fiber sheet 11 that is located on the inner circumferential side when bending is performed is different from that of the fiber sheet 11 that is located on the outer circumferential side when bending is performed. Hence, in Embodiment 9, the interval, in the bending direction, between the fiber recesses 7 in the fiber sheet 91 that is located on the outer circumferential side when bending is performed is set larger than the interval, in the bending direction, between the fiber recesses 7 in the fiber sheets 91 that is located on the inner circumferential side when bending is performed.

### Advantageous Effects of Vacuum Insulation Material 90 according to Embodiment 9

In the vacuum thermal insulator 90 according to Embodiment 9, the interval, in the bending direction, between the fiber recesses 7 in the fiber sheet 91 that is located on the outer circumferential side when bending is performed is set larger than the interval, in the bending direction, between the fiber recesses 7 in the fiber sheets 91 that is located on the inner circumferential side when bending is performed.

Because this configuration can make the angle formed between adjacent fiber recesses in the bending direction when the vacuum thermal insulator 90 is bent uniform among all the laminated fiber sheets 11, which have different circumferential lengths, bending is easy. Furthermore, because the number of the thickness-direction fibers 6 in the fiber sheet 91 that is located on the inner circumferential side when bending is performed can be reduced, insulation performance can be improved.

Note that FIGs. 2, 3, 4, 5, 11, and 14, which are used to explain the present invention, are partially enlarged views for making the understanding of the fiber distribution in the thickness direction easy, and the vertical-to-horizontal ratio is not specifically limited to those illustrated. In addition, the interval between the fiber recesses in FIGs. 7, 9, and 10 does not suffer from any dimensional limitations.

### List of Reference Signs

- 3: core
- 4: enclosure
- 4a: outer covering sheet
- 5: heat insulation fiber
- 6: thickness-direction fiber
- 6a: second thickness-direction fiber
- 7: fiber recess
- 7a: second fiber recess
- 10: vacuum thermal insulator
- 11: fiber sheet
- 11a: fiber sheet
- 12: slide film
- 13: heat-retaining tank
- 14a: tank body part
- 14b: tank upper-end-plate part
- 14c: tank lower-end-plate part
- 15: non-vacuum thermal insulator
- 16: objet to be kept warm
- 20: vacuum thermal insulator
- 21: fiber sheet
- 30: vacuum thermal insulator
- 31: fiber sheet
- 50: vacuum thermal insulator
- 50a: vacuum thermal insulator
- 51: fiber sheet
- 51a: fiber sheet
- 60: vacuum thermal insulator
- 61: fiber sheet
- 70a: vacuum thermal insulator
- 70b: vacuum thermal insulator
- 90: vacuum thermal insulator
- 91: fiber sheet

## Claims

1. A vacuum thermal insulator (10) comprising:
- a core (3) formed of a single fiber sheet (11) comprising heat insulation fibers (5) extending in a plane direction, or a lamination of a plurality of such fiber sheets (11); and
- an enclosure (4) accommodating the core (3),
the vacuum thermal insulator (10) being deformable by bending to have a curved shape at least at a part of the vacuum thermal insulator (10), the fiber sheet (11) including a plurality of thickness-direction fibers (6) being a part of the heat insulation fibers (5) and extending in a thickness direction of the fiber sheet (11), the fiber sheet (11) comprising a plurality of fiber recesses (7) provided in at least one surface thereof, configured to satisfy a relationship, t / Px ≤ 1, where t is a thickness of the fiber sheet (11), and Px is an interval between the thickness-direction fibers (6) and wherein the thickness-direction fibers (6) and the fiber recesses (7) are formed by inserting needles used in a needle-punching method into the fiber sheet (11).

2. The vacuum thermal insulator (10) of claim 1,
wherein the one surface of the fiber sheet (11) is located on an inner circumferential side when the vacuum thermal insulator (10) is formed in the curved shape.

3. The vacuum thermal insulator (10) of claim 1 or 2,
wherein the fiber recesses (7) are arranged along a bending direction of the fiber sheet (11) at an interval and a direction perpendicular to the bending direction of the fiber sheet (11), at an other interval,
the interval between the fiber recesses (7) in the bending direction of the fiber sheet (11) is smaller than the other interval.

4. The vacuum thermal insulator (10) of any one of claims 1 to 3,
wherein the core (3) is configured to have different proportions between the fibers oriented in the bending direction and the fibers oriented in the direction perpendicular to the bending direction,
the fibers oriented in the bending direction being smaller in proportion.

5. The vacuum thermal insulator (10) of any one of claims 1 to 2,
wherein the vacuum thermal insulator (10) is formed in a hemispherical shape, and
the fiber sheet (11) is provided with a plurality of fiber recesses (7) in a radial pattern centered at an apex of the hemisphere, a pattern of concentric circles centered at the apex of the hemisphere, or a pattern including both radial pattern and pattern of concentric circles.

6. The vacuum thermal insulator (10) of any one of claims 1 to 5, further comprising a slide film (12) configured to reduce friction between the core (3) and the enclosure (4) between a surface of the core (3) located on the inner circumferential side when the vacuum thermal insulator (10) is formed in the curved shape and the enclosure (4).

7. The vacuum thermal insulator (10) of any one of claims 1 to 6,
wherein at least some of the fiber recesses (7) satisfy a relationship 0.005 ≤ Pi / Ra ≤ 0.2, where Pi is an interval of the fiber recesses (7) in the bending direction of the fiber sheet (11), and Ra is a radius of curvature when the vacuum thermal insulator (10) is formed in a curved shape.

8. The vacuum thermal insulator (10) of any one of claims 1 to 7,
wherein the core (3) is formed by laminating a plurality of the fiber sheets (11), and,
the interval in each of the fiber sheets (11), in the bending direction of the fiber sheet (11), between the fiber recesses (7) is smaller than the interval in the fiber sheet (11) located on the outer circumferential side thereof when the vacuum thermal insulator (10) is formed in the curved shape.

9. The vacuum thermal insulator (10) of any one of claims 1 to 8,
wherein the fiber recesses (7) are provided only in the one surface of the fiber sheet (11).

10. A heat retainer comprising:
- a cylindrical heat-retaining tank (13) that stores a heat medium; and
- a vacuum thermal insulator (10) according to any one of claims 1 to 9 configured to cover an outer circumference of the heat-retaining tank (13).

## Patentansprüche

1. Vakuum-Wärmeisolator (10), der Folgendes aufweist:
- einen Kern (3), der aus einem einzelnen Faserflächenkörper (11), der sich in einer ebenen Richtung erstreckende Wärmedämmfasern (5) aufweist, oder aus einer Laminierung einer Vielzahl solcher Faserflächenkörper (11) gebildet ist; und
- eine Umhüllung (4), die den Kern (3) aufnimmt,
wobei der Vakuum-Wärmeisolator (10) durch Biegen verformbar ist, um zumindest in einem Teil des Vakuum-Wärmeisolators (10) eine gekrümmte Form aufzuweisen,
wobei der Faserflächenkörper (11) eine Vielzahl von in Dickenrichtung verlaufenden Fasern (6) enthält, die ein Teil der Wärmedämmfasern (5) sind und sich in einer Dickenrichtung des Faserflächenkörpers (11) erstrecken, wobei der Faserflächenkörper (11) eine Vielzahl von Faseraussparungen (7) aufweist, die in mindestens einer seiner Oberflächen vorgesehen sind, konfiguriert ist, um eine Beziehung t / Px ≤ 1 zu erfüllen, wobei t eine Dicke des Faserflächenkörpers (11) ist und Px ein Abstand zwischen den in Dickenrichtung verlaufenden Fasern (6) ist, und wobei die in Dickenrichtung verlaufenden Fasern (6) und die Faseraussparungen (7) durch Einführen von in einem Nadelstanzverfahren verwendeten Nadeln in den Faserflächenkörper (11) gebildet werden.

2. Vakuum-Wärmeisolator (10) nach Anspruch 1,
wobei sich die eine Oberfläche des Faserflächenkörpers (11) auf einer inneren Umfangsseite befindet, wenn der Vakuum-Wärmeisolator (10) in der gekrümmten Form ausgebildet ist.

3. Vakuum-Wärmeisolator (10) nach Anspruch 1 oder 2,
wobei die Faseraussparungen (7) entlang einer Biegerichtung des Faserflächenkörpers (11) in einem Abstand angeordnet sind und in einer Richtung senkrecht zur Biegerichtung des Faserflächenkörpers (11) in einem anderen Abstand,
wobei der Abstand zwischen den Faseraussparungen (7) in der Biegerichtung des Faserflächenkörpers (11) kleiner ist als der andere Abstand.

4. Vakuum-Wärmeisolator (10) nach einem der Ansprüche 1 bis 3, wobei der Kern (3) so konfiguriert ist, dass er unterschiedliche Proportionen zwischen den in der Biegerichtung ausgerichteten Fasern und den in der Richtung senkrecht zur Biegerichtung orientierten Fasern aufweist,
wobei die in Biegerichtung ausgerichteten Fasern kleiner proportioniert sind.

5. Vakuum-Wärmeisolator (10) nach einem der Ansprüche 1 bis 2, wobei der Vakuum-Wärmeisolator (10) eine halbkugelförmige Gestalt aufweist, und
wobei der Faserflächenkörper (11) mit einer Vielzahl von Faseraussparungen (7) in einem radialen Muster gebildet ist, das an einem Scheitelpunkt der Halbkugel zentriert ist, einem Muster aus konzentrischen Kreisen, das am Scheitelpunkt der Halbkugel zentriert ist, oder einem Muster, das sowohl ein radiales Muster als auch ein Muster aus konzentrischen Kreisen aufweist.

6. Vakuum-Wärmeisolator (10) nach einem der Ansprüche 1 bis 5,
der ferner einen Gleitfilm (12) aufweist, der so gestaltet ist, dass er die Reibung zwischen dem Kern (3) und der Umhüllung (4) zwischen einer Oberfläche des Kerns (3), die sich auf der inneren Umfangsseite befindet, wenn der Vakuum-Wärmeisolator (10) in der gekrümmten Form ausgebildet ist, und dem Gehäuse (4) verringert.

7. Vakuum-Wärmeisolator (10) nach einem der Ansprüche 1 bis 6, wobei zumindest einige der Faseraussparungen (7) die Beziehung 0,005 ≤ Pi / Ra ≤ 0,2 erfüllen, wobei Pi ein Abstand der Faseraussparungen (7) in der Biegerichtung des Faserflächenkörpers (11) ist und Ra ein Krümmungsradius ist, wenn der Vakuum-Wärmeisolator (10) in einer gekrümmten Form ausgebildet ist.

8. Vakuum-Wärmeisolator (10) nach einem der Ansprüche 1 bis 7, wobei der Kern (3) durch Laminieren einer Vielzahl von Faserflächenkörpern (11) gebildet ist und,
wobei der Abstand in jedem der Faserflächenkörper (11) in der Biegerichtung des Faserflächenkörpers (11) zwischen den Faseraussparungen (7) kleiner ist als der Abstand in dem Faserflächenkörper (11), der sich auf der äußeren Umfangsseite desselben befindet, wenn der Vakuumwärmeisolator (10) in der gekrümmten Form ausgebildet ist.

9. Vakuum-Wärmeisolator (10) nach einem der Ansprüche 1 bis 8, wobei die Faseraussparungen (7) nur in der einen Oberfläche des Faserflächenkörpers (11) vorgesehen sind.

10. Wärmespeicher, der Folgendes aufweist:
- einen zylindrischen Wärmespeicherbehälter (13), der ein Wärmemedium speichert; und
- einen Vakuum-Wärmeisolator (10) nach einem der Ansprüche 1 bis 9, der so konfiguriert ist, dass er einen Außenumfang des Wärmespeicherbehälters (13) bedeckt.

## Revendications

1. Isolant thermique sous vide (10), comprenant:
- un noyau (3) formé d'une seule feuille de fibres (11) comprenant des fibres d'isolation thermique (5) s'étendant dans une direction plane ou d'une stratification d'une pluralité de telles feuilles de fibres (11); et
- une enveloppe (4) recevant le noyau (3),
l'isolant thermique sous vide (10) étant déformable par flexion pour présenter une forme incurvée au moins sur une partie de l'isolant thermique sous vide (10), la feuille de fibres (11) incluant une pluralité de fibres de direction d'épaisseur (6) faisant partie des fibres d'isolation thermique (5) et s'étendant dans une direction d'épaisseur de la feuille de fibres (11), la feuille de fibres (11) comprenant une pluralité d'évidements de fibres (7) prévus dans au moins une surface de celle-ci, configuré pour satisfaire une relation, t / Px ≤ 1, où t est une épaisseur de la feuille de fibres (11) et Px est un intervalle entre les fibres de direction d'épaisseur (6) et dans lequel les fibres de direction d'épaisseur (6) et les évidements de fibres (7) sont formés en insérant des aiguilles utilisées dans un procédé d'aiguilletage dans la feuille de fibres (11).

2. Isolant thermique sous vide (10) selon la revendication 1,
dans lequel ladite surface de la feuille de fibres (11) est située sur un côté circonférentiel intérieur lorsque l'isolant thermique sous vide (10) est formée de manière incurvée.

3. Isolant thermique sous vide (10) selon la revendication 1 ou 2,
dans lequel les évidements de fibres (7) sont disposés à un certain intervalle suivant une direction de flexion de la feuille de fibres (11) et à un autre intervalle dans une direction perpendiculaire à la direction de flexion de la feuille de fibres (11), l'intervalle entre les évidements de fibres (7) dans la direction de flexion de la feuille de fibres (11) étant plus petit que l'autre intervalle.

4. Isolant thermique sous vide (10) selon l'une quelconque des revendications 1 à 3, dans lequel le noyau (3) est configuré pour avoir des proportions différentes entre les fibres orientées dans la direction de flexion et les fibres orientées dans la direction perpendiculaire à la direction de flexion,
les fibres orientées dans la direction de flexion étant plus petites en proportion.

5. Isolant thermique sous vide (10) selon l'une quelconque des revendications 1 à 2, dans lequel l'isolant thermique sous vide (10) est formé de manière hémisphérique et
la feuille de fibres (11) est pourvue d'une pluralité d'évidements de fibres (7) selon un motif radial centré sur un sommet de l'hémisphère, un motif de cercles concentriques centré sur le sommet de l'hémisphère ou un motif incluant à la fois un motif radial et un motif de cercles concentriques.

6. Isolant thermique sous vide (10) selon l'une quelconque des revendications 1 à 5, comprenant en outre un film de glissement (12) configuré pour réduire le frottement entre le noyau (3) et l'enveloppe (4), entre une surface du noyau (3) située sur le côté circonférentiel intérieur lorsque l'isolant thermique sous vide (10) est formé de manière incurvée et l'enveloppe (4).

7. Isolant thermique sous vide (10) selon l'une quelconque des revendications 1 à 6, dans lequel au moins certains des évidements de fibres (7) satisfont une relation 0,005 Pi / Ra ≤ 0,2, où Pi est un intervalle des évidements de fibres (7) dans la direction de flexion de la feuille de fibres (11) et Ra est un rayon de courbure lorsque l'isolant thermique sous vide (10) est formé de manière incurvée.

8. Isolant thermique sous vide (10) selon l'une quelconque des revendications 1 à 7, dans lequel le noyau (3) est formé en stratifiant une pluralité de feuilles de fibres (11) et
l'intervalle dans chacune des feuilles de fibres (11), dans la direction de flexion de la feuille de fibres (11), entre les évidements de fibres (7) est plus petit que l'intervalle dans la feuille de fibres (11) située sur le côté circonférentiel extérieur de celle-ci lorsque l'isolant thermique sous vide (10) est formé de manière incurvée.

9. Isolant thermique sous vide (10) selon l'une quelconque des revendications 1 à 8, dans lequel les évidements de fibres (7) sont prévus uniquement dans une surface de la feuille de fibres (11).

10. Dispositif de rétention de chaleur, comprenant:
- un réservoir cylindrique de rétention de chaleur (13) qui stocke un fluide calorifique; et
- un isolant thermique sous vide (10) selon l'une quelconque des revendications 1 à 9 configuré pour recouvrir une circonférence extérieure du réservoir de rétention de chaleur (13).
